# EUROPEAN PATENT SPECIFICATION

(11) **EP 3 144 508 B1**
(45) Date of publication and mention of the grant of the patent: **01.08.2018**
(21) Application number: 16189360.7
(22) Date of filing: 16.09.2016
(51) Int. Cl.: F02D 9/10, F16H 57/00, F02B 37/18, F02M 26/54, F02M 26/57, F02D 11/10, F16H 57/032, H02K 7/116

(54) **ELECTROMECHANICAL ACTUATOR TO OPERATE A UTILIZATION DEVICE OF AN INTERNAL COMBUSTION ENGINE**
ELEKTROMECHANISCHER AKTUATOR ZUR BETÄTIGUNG EINER VERWENDUNGSVORRICHTUNG EINES VERBRENNUNGSMOTORS
ACTIONNEUR ÉLECTROMÉCANIQUE DESTINÉ À FAIRE FONCTIONNER UN DISPOSITIF D'UTILISATION D'UN MOTEUR À COMBUSTION INTERNE

(30) Priority: 16.09.2015 IT UB20151998
(43) Date of publication of application: 22.03.2017
(73) Proprietor: Magneti Marelli S.p.A., 20011 Corbetta (MI) (IT)
(72) Inventor: PEZZOTTA, Federico, 86036 Montenero di Bisaccia (IT); MUSOLESI, Stefano, 40122 Bologna (IT); AVANZI, Matteo, 40014 Crevalcore (IT)
(74) Representative: Maccagnan, Matteo

(56) References cited:
- US-A1- 2006 157 027
- US-A1- 2014 187 373
- US-B1- 6 491 019

## Description

### TECHNICAL FIELD

The present invention relates to an electromechanical actuator to operate a utilization device of an internal combustion engine.

### PRIOR ART

As already known, an internal combustion engine supercharged by means of a turbocharger supercharging system comprises a plurality of cylinders, each of them being connected to an intake manifold and to an exhaust manifold. The intake manifold receives a gas mixture comprising both exhaust gas and fresh air, i.e. air from the external environment, through an intake duct regulated by a throttle valve. The exhaust manifold is then connected to an exhaust duct which feeds the burned gases to an exhaust system, which releases the combustion-produced gases into the atmosphere and normally comprises at least one catalyst (possibly provided with a particulate filter) and at least one silencer arranged downstream of the catalyst.

The supercharging system of the internal combustion engine comprises a turbocharger provided with a turbine, which is arranged along the exhaust duct to rotate at high speed under the action of the exhaust gases expelled from the cylinders and a compressor, which is arranged along the intake duct and is mechanically coupled to the turbine to be rotated by the turbine to increase the pressure of the air in the feeding duct.

The internal combustion engine further comprises an exhaust gas recirculation circuit at high pressure and an exhaust gas recirculation circuit at low pressure, along which EGR valves are arranged to adjust the flow rate of the exhaust gases. Moreover, it is provided a plurality of kinematic elements for moving devices such as the EGR valves to regulate the flow rate of the exhaust gases and/or the turbocharger vanes (in the case of a variable geometry turbocharger).

Both the throttle valve and the aforesaid devices, such as e.g. the EGR valves, are controlled by electromechanical actuators to operate between an open position and a closed position, and vice versa. The electromechanical actuators typically comprise a housing, housing an electric motor and a gear transmission that transmits the movement from the electric motor to a user interface. Usually, the housing of the actuator is made of aluminium and/or plastic material. Moreover, the known electromechanical actuators have a not negligible size, just like e.g. the electromechanical actuator described in the document US6491019. Alternatively, also solutions that are more compact are known to reduce the size in a given direction. For example, the document US2014187373 describes an electromechanical actuator where all components are substantially coaxial to reduce the radial size. However, this makes the structure of the electromechanical actuator more complex and moreover, the radial size is reduced at the expense of an increase in the axial size.

The increasingly strict requirements with regard to a reduction of the overall size and to a containment of weight and costs have given rise to a trend reducing the thickness of the used components or using low density materials; however, in this way, the containment bodies of the electromechanical actuators often have distortions due to the mechanical and thermal stresses to which they are subjected.

### Description of the invention

The object of the present invention is therefore to provide an electromechanical actuator to operate a utilization device of an internal combustion engine, as for example for the actuation of a wastegate valve, that is free from the drawbacks of the prior art and that is easy and inexpensive to manufacture.

According to the present invention, it is provided an electromechanical actuator to operate a utilization device of an internal combustion engine as claimed in the appended claims.

### Brief description of the drawings

The present invention will now be described with reference to the accompanying drawings showing a non-limiting embodiment, in which:
- Figure 1 is a schematic view of a supercharged internal combustion engine;
- Figure 2 is an exploded view of an electromechanical actuator to operate a utilization device of the internal combustion engine of Figure 1 made in accordance with the present invention;
- Figure 3 is a sectional view of the electromechanical actuator of Figure 2; and
- Figure 4 is an enlarged view of a portion of Figure 3.

### PREFERRED EMBODIMENTS OF THE INVENTION

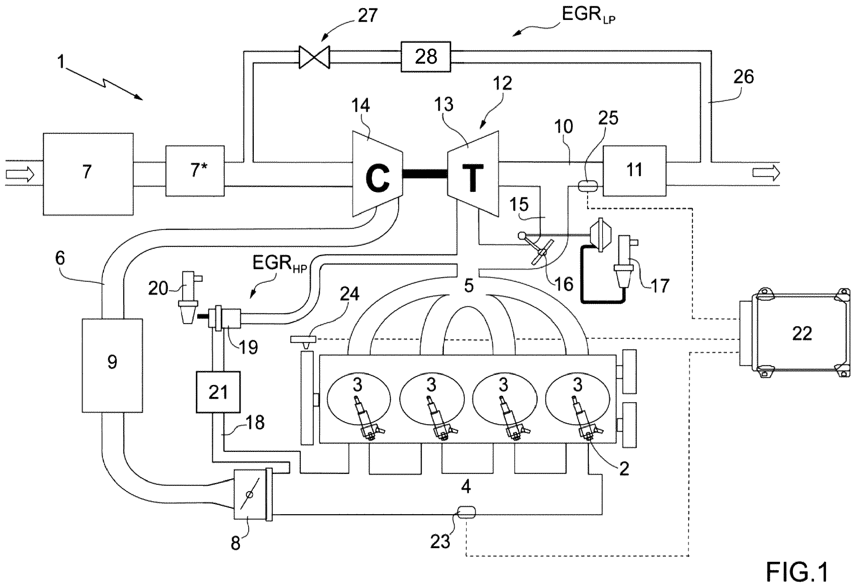

In Figure 1, the reference number 1 indicates in its entirety an internal combustion engine supercharged by means of a turbocharger supercharging system 2.

The following description explicitly refers, without losing its generality, to the case in which the internal combustion engine 1 is supercharged. The electromechanical actuator to operate a utilization device is obviously applied to an internal combustion engine 1 with different structure and system.

The internal combustion engine 1 comprises a plurality of cylinders 3 (in particular, Figure 1 shows four cylinders 3), each of which is connected to an intake manifold 4 through at least a respective intake valve (not shown) and to an exhaust manifold 5 through at least a respective exhaust valve (not shown). The intake manifold 4 receives fresh air (i.e. air from the external environment) through an intake duct 6, which is provided with an air filter 7 and is regulated by a throttle valve 8. According to a preferred embodiment, a flow meter 7* is arranged along the intake duct 6, downstream of the air filter 7. Moreover, an intercooler 9 for cooling the air sucked in is arranged in the intake duct 6. The exhaust manifold 5 is connected to an exhaust duct 10 which feeds the combustion-produced exhaust gases to an exhaust system, which releases the combustion-produced gases into the atmosphere and normally comprises at least one catalyst 11 and at least one silencer (not shown) arranged downstream of the catalyst 11.

The system 2 for supercharging the internal combustion engine 1 comprises a turbocharger 12 provided with a turbine 13, which is arranged in the exhaust duct 10 to rotate at high speed under the action of the exhaust gases expelled from the cylinders 3, and a compressor 14, which is arranged in the intake duct 6 and is mechanically coupled to the turbine 13 to be rotated by the turbine 13 to increase the pressure of the air fed into the intake duct 6.

In the exhaust duct 10 it is provided a bypass duct 15, which is connected in parallel to the turbine 13 to have its ends connected upstream and downstream of the turbine 13; in the bypass duct 15 it is arranged a wastegate valve 16, which regulates the flow rate of the exhaust gases flowing through the bypass duct 15, and is controlled by an actuator 17.

The internal combustion engine 1 further comprises a highpressure circuit EGR_{HP}, which in turn comprises a bypass duct 18 connected in parallel to the assembly formed by the cylinders 3, the intake manifold 4 and the exhaust manifold 5. A P_{off} valve is arranged in the bypass duct 18 to regulate the flow rate of the exhaust gases flowing through the bypass duct 18, said valve being driven by an EGR solenoid valve 20. A heat exchanger 21 for cooling the gas exiting the exhaust manifold 5 is arranged in the bypass duct 18, downstream of the P_{off} valve 19.

The internal combustion engine 1 is controlled by an electronic control unit 22, which supervises the operation of all the components of the internal combustion engine 1. The electronic control unit 22 is connected to a sensor 23 measuring the temperature and the pressure of the gas mixture in the intake manifold 4, to a sensor 24 measuring the rotation speed of the internal combustion engine 1 and to a sensor 25 (typically an oxygen linear probe UHEGO or UEGO - of known type and not described in detail) measuring the air/fuel ratio of the exhaust gas upstream of the catalyst 11.

The internal combustion engine 1 finally comprises a low-pressure circuit EGR_{LP}, which in turn comprises a bypass duct 26 arranged in the exhaust duct 10; the bypass duct 26 is connected in parallel to the turbocharger 12. The bypass duct 26 houses an EGR valve 27, which regulates the flow rate of the exhaust gases flowing through the duct 26. The bypass duct 26, upstream of the valve 27, also houses a heat exchanger 28 for cooling the gas exiting the exhaust manifold 5 and entering the compressor 14. The low-pressure circuit EGR_{LP} comprises a three-way mixer (not shown), which is arranged at the intersection between the exhaust duct 10 and the intake duct 6 and regulates the mixing of the exhaust gases coming from the exhaust duct 10 with the fresh air in the intake duct 6.

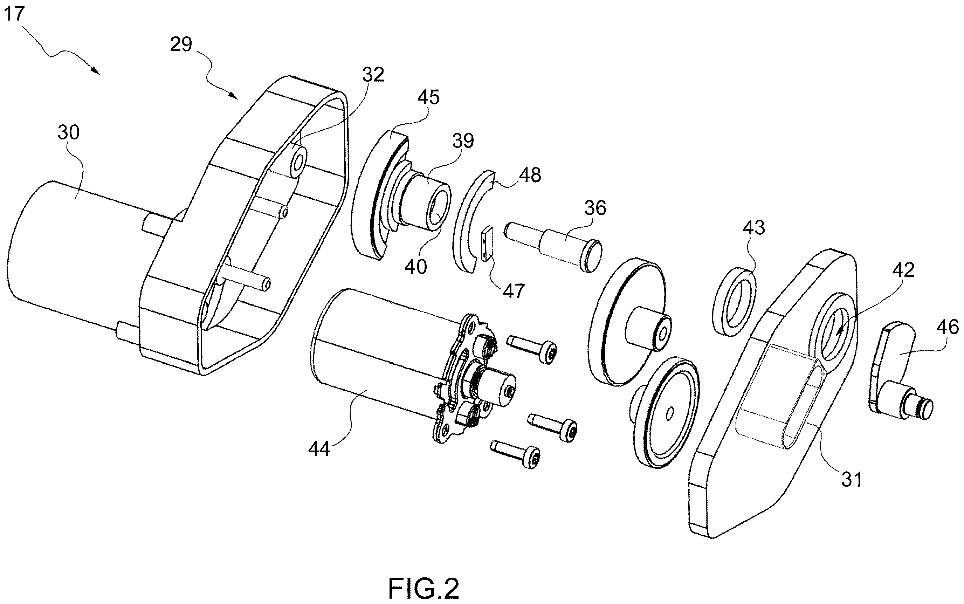

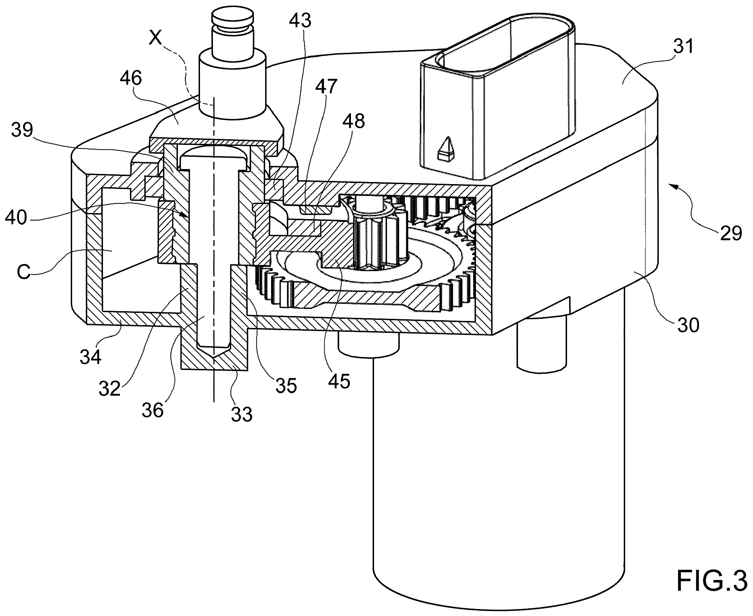

The low-pressure circuit EGR_{LP} originates from the exhaust duct 10 downstream of the catalyst 11 to remove the exhaust gases that have already been treated by the catalyst 11 and have a pressure only slightly higher than the atmospheric pressure; in this way, the exhaust gases recirculated by the bypass duct 26 are "cleaner", i.e. have a smaller amount of polluting substances. This configuration is also called "Long-Route" EGR, since the bypass duct 26 must be longer than usual to get downstream of the catalyst 11. Figures 2 to 4 show in detail the electromechanical actuator 17 configured to operate a utilization device, such as for example the wastegate valve 16, of the internal combustion engine 1.

As an alternative, the electromechanical actuator 17 can control any one of the following utilization devices of the internal combustion engine 1: the throttle valve 8, the EGR solenoid valve 20 controlling the P_{off} valve 19 to regulate the flow rate of the exhaust gases flowing through the bypass duct 18, the solenoid valve controlling the EGR valve 27 to regulate the flow rate of the exhaust gases flowing through the bypass duct 26, the solenoid valve controlling the three-way mixer arranged at the intersection between the exhaust duct 10 and the intake duct 6, the devices equipping the turbocharger 12 (such as, e.g. vanes and/or valves), water/oil valves, swirl/tumble valves and aerodynamic vanes.

As shown in Figures 2 to 4, the electromechanical actuator 17 comprises a housing 29 formed by a lower element 30 and by a lid 31, which are suitably coupled to define a chamber C housing a seat 32.

The seat 32 is provided with a symmetry axis X and is closed at the bottom. The seat 32 is cup-shaped so as to have a portion of bottom wall 33 cantileverly protruding from a base wall 34 of the lower element 30 toward the outside of the housing 29, and a cylindrical side wall 35 extending toward the inside of the chamber C. The seat 32 houses a lower end 36* of a pin 36, which is also coaxial to the symmetry axis X.

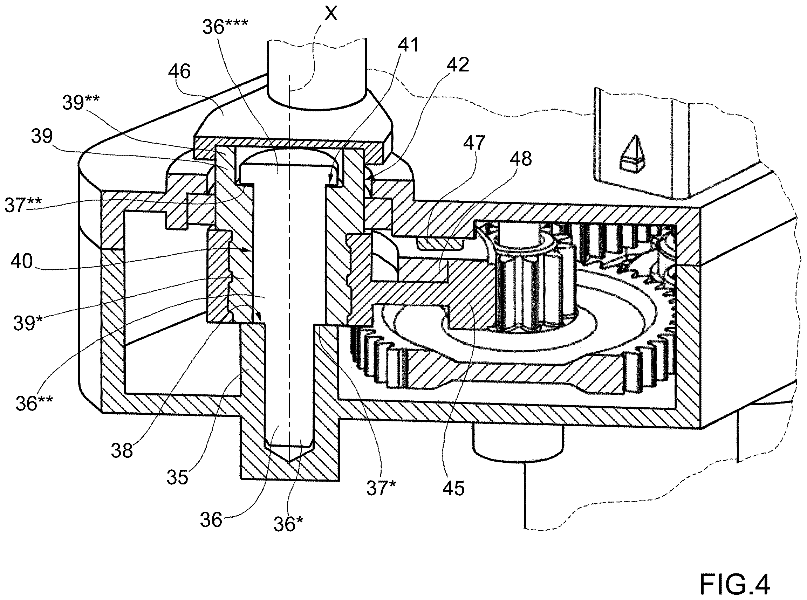

As shown in Figure 4, the pin 36 is provided with a plurality, in particular two, of abutments 37*, 37**, namely cross-section variations along the symmetry axis X of the pin 36, and is divided in a lower end 36*, a central portion 36** and a head portion 36***. The lower end 36* housed in the seat 32 is the smallest section of the pin 36.

The wall side 35 acts as a stop for the abutment 37* of the pin 36 to achieve the correct positioning of the pin 36 in the seat 32 and, at the same time, to allow a certain clearance along the symmetry axis X of the pin 36.

Both the central portion 36** of the pin 36 and a lower end of a shaft 39 coaxial to the symmetry axis X act as stops at an upper surface 38 of the side wall 35.

The shaft 39 can be made by using different integrated materials, by assembling or in a single piece.

The shaft 39 is hollow; in other words, the shaft 39 is provided with a through hole 40 housing the central portion 36** of the pin 36. The shaft 39 is also provided with an annular abutment 41, coaxial to the symmetry axis X formed in the inner surface defining the through hole 40. The central portion 36** of the pin 36 housed in the through hole 40 has a larger section than the lower end 36*.

The annular abutment 41 acts as a stop for the head portion 36*** of the pin 36, having in turn a section larger than the section of the central portion 36**; in particular, the annular abutment 41 acts as a stop for the abutment 37** of the pin 36.

The shaft 39 comprises a central portion 39* completely arranged inside the chamber C and an upper end 39**, which protrudes through a through opening 42, coaxial to the symmetry axis X, formed in the upper wall of the lid 31.

A tight seal 43, which is interposed between the above components, coaxial to the symmetry axis X is provided to ensure a tight sealing between the components, in particular between the shaft 39 and the lid 31.

The electromechanical actuator 17 is driven by an electric motor 44 housed in a suitable seat formed in the lower element 30.

Through a suitable gear transmission, the movement is transmitted from the electric motor 44 to the shaft 39. The transmission can be alternatively provided by different solutions including, for example, the use of belts, etc.

In the preferred embodiment, the transmission of movement is provided by means of gears. In particular, the gear transmission comprises a toothed drive element 45, which is preferably made as a toothed sector, but could also be shaped as a classic toothed wheel which cooperates with the central portion 39* to transmit the movement to the shaft 39.

The utilization device of the internal combustion engine 1 can be operated by an interface lever 46 or by a geometry formed directly on the shaft 39, in particular at the upper end 39**.

If the utilization device of the internal combustion engine 1 is operated through the interface lever 46, it is operated by the projecting upper end 39** of the shaft 39 to which it is connected. The interface lever 46 is integral with the projecting upper end 39** of the shaft 39 and the connection can be any type of connection, e.g. welding (in particular a laser welding).

On the other hand, if the utilization device of the internal combustion engine 1 is directly operated through the geometry of the shaft 39, there is a coaxial torque grip; in other words, there is the direct operation of the utilization device by the shaft 39, in particular by the upper end 39**, with no help from any interface lever 46. For compromising among the requirements of mechanical resistance, thermal resistance, weight and costs, in the preferred embodiment, the lower element 30 is made of a metallic material such as aluminium, the lid 31 and the toothed element 45 are made of a plastic material, while the pin 36 and the shaft 39 are made of a metallic material, preferably steel.

The outer surface of the central portion 39* of the shaft 39, at the coupling with the toothed element 45, is complementary to the inner surface of the toothed element 45 so that they are form-coupled. The toothed element 45 can be formed by co-moulding with the shaft 39 or by other technologies or can be integrated therewith.

In order to avoid tribological problems (such as friction and wear) between the shaft 39 and the pin 36 in relative movement, the following can be provided:
- coatings which reduce friction; and/or
- elements for the reduction of friction interposed between the shaft 39 and the pin 36; and/or
- suitable superficial treatments; and/or
- a selection of suitable tribological couplings, i.e. of suitable coupling materials.

According to a preferred variant, the electromechanical actuator 17 is provided with a sensor 47, which is coupled to an inner surface of the lid 31 in a position facing and close to a rotor part of the sensor 47 to detect the rotation movement of the toothed element 45 with respect to the lid 31.

The rotor part 48 may have a toroidal shape or may have the shape of a circular sector, which, in use, is arranged at the toothed element 45.

Furthermore, the rotor part 47 can be connected and/or assembled with the shaft 39 by means of any type of process or integration.

In use, the electric motor 44, controlled by the electronic control unit 22, rotates through the gear transmission the toothed element 45 that is integral with the shaft 39. By rotating the shaft 39 about the symmetry axis X, the movement is transmitted to the utilization device through the interface lever 46 or through the geometry of the shaft 39, in particular the upper end 39**, that controls the utilization device.

The shaft (in the case of an electromechanical actuator 17 with no interface lever 46) or the assembly formed by the upper end 39** of the shaft 39 and by the interface lever 46 integral with said upper end 39** (in the case of an electromechanical actuator 17 provided with an interface lever 46) may be exclusively led through the lid 31. In other words, the driven section of the shaft 39 or the assembly formed by the upper end 39** of the shaft 39 and by the interface lever 46 is arranged on a side of the housing 29 opposite to the one where the electric motor 44 is arranged.

The electromechanical actuator 17 described hitherto has a plurality of advantages. In particular, it is of simple and inexpensive manufacture, has the driven section of the shaft 39 or the interface lever 46 on the opposite side with respect to the seat of the electric motor 44, has a reduced size and is characterized by a high mechanical stress resistance.

## Claims

1. An electromechanical actuator (17) to operate a utilization device of an internal combustion engine (1); the electromechanical actuator (17) comprising:
- a housing (29) made through a lower element (30), housing a closed seat (32), which is provided with a symmetry axis (X), and a lid (31), which is provided with a through opening (42) that is coaxial to the symmetry axis (X);
- a pin (36), which is coaxial to the symmetry axis (X) and has a lower end (36*) that engages the seat (32);
- a shaft (39), which is coaxial to the symmetry axis (X) and is provided with a through hole (40) housing a central portion (36**) of the pin (36); and
- an electric motor (44), which, through a gear transmission, rotates the shaft (39) and is housed in a seat formed in the lower element (30); wherein an upper end (39**) of the shaft (39) projects from the housing (29) through the through opening (42); wherein the shaft (39) is exclusively led through the lid (31) of the housing (29); and wherein an upper surface (38) of the seat (32) acts as a stop both for a lower end of the shaft (39) and for a first abutment (37*) of the pin (36).

2. An electromechanical actuator (17) according to claim 1, provided with an interface lever (46) to operate the utilization device, which is connected to the projecting upper end (39**) of the shaft (39) by which it is driven.

3. An electromechanical actuator (17) according to claim 1 or 2, wherein the pin (36) is provided with a plurality, in particular two, of abutments (37*, 37**) or cross-section variations along the symmetry axis (X).

4. An electromechanical actuator (17) according to any one of the previous claims, wherein an inner surface of the shaft (39) defining the through hole (40) is provided with an annular abutment (41), which is coaxial to the symmetry axis (X) and acts as a stop for a second abutment (37**) of the pin (36).

5. An electromechanical actuator (17) according to any one of the previous claims, wherein the gear transmission comprises a toothed element (45), in particular a toothed sector (45), which cooperates with the shaft (39).

6. An electromechanical actuator (17) according to any one the previous claims, wherein a toroidal rotor part (48) or a circular sector is provided at the toothed element (45) .

7. An electromechanical actuator (17) according to claim 6, comprising a sensor (47), which is connected to an inner surface of the lid (31) in a position facing and close to the rotor part (48) to sense the rotation movement of the toothed element (45) relative to the lid (31).

8. An electromechanical actuator (17) according to any one of the previous claims, wherein the pin (36) and the shaft (39) are made of a metallic material, preferably steel.

9. An electromechanical actuator (17) according to any one of the previous claims, wherein the lower element (30) of the housing (29) is made of aluminium and the lid (31) is made of a plastic material.

10. An electromechanical actuator (17) according to any one of claims 2-9, wherein the coupling between the shaft (39) and the interface lever (46) is obtained by laser welding.

## Patentansprüche

1. Elektromechanischer Stellantrieb (17) zur Betätigung einer Verwendungsvorrichtung einer Brennkraftmaschine (1), wobei der elektromechanische Stellantrieb (17) Folgendes umfasst:
- ein Gehäuse (29), bestehend aus einem unteren Teil (30), in dem eine geschlossene Aufnahmefläche (32) untergebracht ist, die mit einer Symmetrieachse (X) versehen ist, und eine Kappe (31), die mit einer Durchgangsöffnung (42) versehen ist, die koaxial zu der Symmetrieachse (X) verläuft;
- ein Bolzen (36), der koaxial zu der Symmetrieachse (X) angeordnet ist und eine unteres Ende (36*) aufweist, das in die Aufnahmefläche (32) eingreift;
- eine Welle (39), die koaxial zu der Symmetrieachse (X) verläuft und eine Durchgangsöffnung (40) aufweist, in der ein Mittelabschnitt des Bolzens (36) untergebracht ist; und
- ein Elektromotor (44), der die Welle (39) durch ein Zahnradgetriebe dreht und der auf einer in dem unteren Teil (30) ausgebildeten Aufnahmefläche untergebracht ist;
wobei
ein oberes Ende (39**) der Welle (39) durch die Durchgangsöffnung (42) von dem Gehäuse (29) vorragt, die Welle (39) ausschließlich durch die Kappe (31) des Gehäuses (29) geführt wird und eine Oberseite (38) der Aufnahmefläche (32) als Anschlag für ein unteres Ende der Welle (39) und für eine erste Stoßfläche (37*) des Bolzens (36) dient.

2. Elektromechanischer Stellantrieb (17) nach Anspruch 1, umfassend einen Schnittstellenhebel (46) zur Betätigung der Verwendungsvorrichtung, der mit dem vorragenden oberen Ende (39**) der Welle (39) verbunden ist, von der er angetrieben wird.

3. Elektromechanischer Stellantrieb (17) nach Anspruch 1 oder 2, wobei der Bolzen (36) eine Mehrzahl, insbesondere zwei, Stoßflächen (37*, 37**) oder Querschnittsänderungen entlang der Symmetrieachse (X) aufweist.

4. Elektromechanischer Stellantrieb (17) nach einem der vorstehenden Ansprüche, wobei eine die Durchgangsöffnung (40) abgrenzende Innenfläche der Welle (39) eine ringförmige Stoßfläche (41) aufweist, die koaxial zu der Symmetrieachse (X) verläuft und als Anschlag für eine zweite Stoßfläche (37**) des Bolzens dient.

5. Elektromechanischer Stellantrieb (17) nach einem der vorstehenden Ansprüche, wobei das Zahnradgetriebe ein Zahnelement (45), insbesondere einen Zahnabschnitt, umfasst, der mit der Welle zusammenwirkt (39).

6. Elektromechanischer Stellantrieb (17) nach einem der vorstehenden Ansprüche, wobei an dem Zahnelement (45) ein ringförmiges Rotorteil (48) oder ein kreisförmiger Abschnitt vorgesehen ist.

7. Elektromechanischer Stellantrieb (17) nach Anspruch 6, umfassend einen Sensor (47), der mit einer Innenfläche der Kappe (31) an einer Position verbunden ist, die sich nahe dem Rotorteil (48) befindet und diesem genüberliegt, um die Drehbewegung des Zahnelements (45) relativ zu der Kappe (31) zu erfassen.

8. Elektromechanischer Stellantrieb (17) nach einem der vorstehenden Ansprüche, wobei der Bolzen (36) und die Welle (39) aus metallischem Material, vorzugsweise aus Stahl, gefertigt sind.

9. Elektromechanischer Stellantrieb (17) nach einem der vorstehenden Ansprüche, wobei das untere Element (30) des Gehäuses (29) aus Aluminium und die Kappe (31) aus Kunststoff gefertigt ist.

10. Elektromechanischer Stellantrieb (17) nach einem der Ansprüche 2 - 9, wobei die Verbindung zwischen der Welle (39) und dem Schnittstellenhebel (46) mittels Laserschweißen hergestellt wird.

## Revendications

1. Actionneur électromécanique (17) pour actionner un dispositif d'utilisation d'un moteur à combustion interne (1) ; l'actionneur électromécanique (17) comprenant :
un boîtier (29) réalisé à travers un élément inférieur (30), logeant un siège fermé (32), qui est prévu avec un axe de symétrie (X), et un couvercle (31) qui est prévu avec une ouverture débouchante (42) qui est coaxiale à l'axe de symétrie (X) ;
une broche (36) qui est coaxiale à l'axe de symétrie (X) et a une extrémité inférieure (36*) qui met en prise le siège (32) ;
un arbre (39) qui est coaxial par rapport à l'axe de symétrie (X) et est prévu avec un trou débouchant (40) logeant une partie centrale de la broche (36) ; et
un moteur électrique (44) qui, par le biais d'une transmission par engrenages, fait tourner l'arbre (39) et est logé dans le siège formé dans l'élément inférieur (30) ;
dans lequel :
une extrémité supérieure (39**) de l'arbre (39) fait saillie du boîtier (29) à travers l'ouverture débouchante (42) ; dans lequel l'arbre (39) est exclusivement mené à travers le couvercle (31) du boîtier (29) ; et dans lequel une surface supérieure (38) du siège (32) sert d'arrêt à la fois pour une extrémité inférieure de l'arbre (39) et pour une première butée (37*) de la broche (36).

2. Actionneur électromécanique (17) selon la revendication 1, prévu avec un levier d'interface (46) pour actionner le dispositif d'utilisation, qui est raccordé à l'extrémité supérieure en saillie (39**) de l'arbre (39) grâce auquel il est entraîné.

3. Actionneur électromécanique (17) selon la revendication 1 ou 2, dans lequel la broche (36) est prévue avec une pluralité, en particulier deux, de butées (37*, 37**) ou des variations transversales le long de l'axe de symétrie (X).

4. Actionneur électromécanique (17) selon l'une quelconque des revendications précédentes, dans lequel une surface interne de l'arbre (39) définissant le trou débouchant (40) est prévue avec une butée annulaire (41), qui est coaxiale par rapport à l'axe de symétrie (X) et sert d'arrêt pour une seconde butée (37**) de la broche (36).

5. Actionneur électromécanique (17) selon l'une quelconque des revendications précédentes, dans lequel la transmission par engrenages comprend un élément denté (45), en particulier un secteur denté (45), qui coopère avec l'arbre (39).

6. Actionneur électromécanique (17) selon l'une quelconque des revendications précédentes, dans lequel une partie de rotor toroïdale (48) ou un secteur circulaire est prévu(e) au niveau de l'élément denté (45).

7. Actionneur électromécanique (17) selon la revendication 6, comprenant un capteur (47) qui est raccordé à une surface interne du couvercle (31) dans une position faisant face et à proximité de la partie de rotor (48) pour détecter le mouvement de rotation de l'élément denté (45) par rapport au couvercle (31).

8. Actionneur électromécanique (17) selon l'une quelconque des revendications précédentes, dans lequel la broche (36) et l'arbre (39) sont réalisés avec un matériau métallique, de préférence de l'acier.

9. Actionneur électromécanique (17) selon l'une quelconque des revendications précédentes, dans lequel l'élément inférieur (30) du boîtier (29) est réalisé à partir d'aluminium et le couvercle (31) est réalisé avec une matière plastique.

10. Actionneur électromécanique (17) selon l'une quelconque des revendications 2 à 9, dans lequel le couplage entre l'arbre (39) et le levier d'interface (46) est obtenu par soudage au laser.
